# EUROPÄISCHE PATENTANMELDUNG

(11) **EP 0 873 899 A2**
(43) Veröffentlichungstag der Anmeldung: **28.10.1998**
(21) Anmeldenummer: 98105620.3
(22) Anmeldetag: 27.03.1998
(51) Int. Cl.: B60K 11/08

(54) **Kühlluftführung zur Kühlung der Antriebsanlage eines gepanzerten Rad- oder Kettenfahrzeuges**

(30) Priorität: 27.03.1997 DE 19713017
(71) Anmelder: Henschel Wehrtechnik GmbH, 34127 Kassel (DE)
(72) Erfinder: Schreckenberg, Klaus, 34246 Vellmar (DE)
(74) Vertreter: Wolf, Jens, Dipl.-Phys.

(57) **Zusammenfassung**

Eine Kühlluftführung zur Kühlung der Antriebsanlage eines gepanzerten Rad- oder Kettenfahrzeuges mit einem Lufteintrittsbereich, einem als Wärmetauscher dienenden Kühler, einemden Luftdurchsatz im Kühler steuernden Lüfter und einem Luftaustrittsbereich, der Mittel zur Änderung der Strömungsrichtung der abzugebenden Luft enthält, soll derart weiterentwickelt werden, daß ein für eine effektive Kühlung erforderlicher Luftdurchsatz gewährleistet wird, ohne die Schutzwirkung der betreffenden Fahrzeugaußenflächen unzulässig zu mindern.

Erfindungsgemäß ist hierzu im Luftaustrittsbereich eine Umlenkkammer (4) vorgesehen, die einen dem Innenraum des Fahrzeuges zugewandten Luftführungskanal (10) aufweist, der durch eine längs zum Luftführungskanal (10) verlaufende Stegwand (9) mit freier Stirnseite (15) und eine im Winkel zu dieser angeordnete Anströmwand (12) von einem Luftaustrittsschacht (6) der Umlenkkammer (4) getrennt ist, in den die Luft vom Luftführungskanal (10) durch Überströmen der freien Stirnseite (15) der Stegwand (9) in einen Überströmbereich (13) der Umlenkkammer (4) infolge Strömungsrichtungsänderung gelangt.

## Beschreibung

Die Erfindung betrifft eine Kühlluftführung zur Kühlung der Antriebsanlage eines gepanzerten Rad- oder Kettenfahrzeuges gemäß dem Oberbegriff des Anspruchs 1.

Als Kühlluftführungen für gepanzerte Fahrzeuge sind Stangengrätings bekannt, die über eine im Vergleich zu ihrer Gesamtfläche nur geringe Luftaustrittsfläche verfügen. Sie sind von großer Masse und beanspruchen einen erheblichen Anteil an Fahrzeugaußenfläche.

So ist aus der DE 34 07 570 C1 eine Kühlvorrichtung für einen Kühler der Antriebsanlage eines Fahrzeuges bekannt, bei der die Zu- und die Abluft des Kühlluftgebläses durch Grätings geführt werden. Aus der Form dieser Grätings resultiert ein hoher Strömungwiderstand, der einer effektiven Kühlung entgegensteht.

Der in der DT 20 40 285 C3 beschriebene Kühlluftkanal für Panzerfahrzeuge, der im Eintrittsbereich der Luft eine Kombination von Formteilen mit einem stufenförmigen Ring aus Panzermaterial enthält, bietet einen hinreichenden Schutz gegen Beschuß und bei Einsatz von flüssigen Kampfstoffen. Bei Verwendung eines solchen Kühlluftkanals kommt es jedoch zu einer starken Verwirbelung der Luft, wodurch der Strömungswiderstand erhöht wird.

Der Erfindung liegt die Aufgabe zugrunde, die Kühlluftführung an gepanzerten Rad- und Kettenfahrzeugen derart weiterzuentwickeln, daß ein für eine effektive Kühlung erforderlicher Luftdurchsatz gewährleistet wird, ohne die Schutzwirkung der betreffenden Fahrzeugaußenflächen unzulässig zu mindern.

Diese Aufgabe wird erfindungsgemäß gelöst, indem im Luftaustrittsbereich eine Umlenkkammer vorgesehen ist, die einen dem Innenraum des Fahrzeuges zugewandten Luftführungskanal aufweist, der durch eine längs zum Luftführungskanal verlaufende Stegwand und eine im Winkel zu dieser angeordnete Anströmwand von einem Luftaustrittsschacht getrennt ist, in den die Luft vom Luftführungskanal durch Überströmen der freien Stirnseite der Stegwand in einen Überströmbereich infolge Strömungsrichtungsänderung gelangt.

Die Erfindung ist mit dem Vorteil einer effektiven Kühlung der Antriebsanlage des gepanzerten Fahrzeuges bei gleichzeitiger Sicherung der Schutzwirkung der betreffenden Außenflächen des Fahrzeuges verbunden, indem die Strömungsrichtung der Luft geändert wird, ohne eine signifikante Verwirbelung derselben hervorzurufen.

In zweckmäßiger Ausgestaltung der Erfindung verringert sich der Querschnitt des Luftführungskanals in Strömungsrichtung der Luft in gleichem Maße, in welchem das Luftvolumen durch bereits ausgetretene Luft beim Längsdurchströmen der Umlenkkammer abnimmt. Zwischen der Innenwand der Umlenkkammer und der Stegwand kann hierfür ein Leitblech vorgesehen sein, das in Strömungsrichtung der Luft in Richtung der freien Stirnseite der Stegwand ansteigt.

Zur Erzeugung einer gerichteten Rotationsbewegung der Luft kann ein schraubenförmig gewundenes Luftführungselement in einem Übergangsbereich zwischen dem Luftführungskanal und dem Luftaustrittsschacht vorgesehen sein. Mit dem Luftführungselement wird ein seitliches Überströmen der Stegwand erreicht und damit der Strömungswiderstand reduziert.

In weiterer vorteilhafter Ausgestaltung der Erfindung ist der Luftaustrittsschacht durch die Anströmwand nur teilweise abgeschlossen, so daß eine Teilluftmenge in den Luftaustrittsschacht gelangt, ohne den Luftführungskanal durchströmt zu haben. Dabei ist die Anströmwand zweckmäßig derart geneigt, daß die Luft in Richtung des Luftführungskanals und des Luftaustrittsschachtes gelenkt wird.

Zur Minderung der Strömungsverluste kann die Umlenkkammer mit aerodynamisch geformten Material ausgekleidet sein.

Gemäß einer bevorzugten Ausführung der Erfindung ist die Umlenkkammer so am Fahrzeug angeordnet, daß die Strömungsrichtung der Luft vor dem Eintritt in die Umlenkkammer mit der Längserstreckung des Luftführungskanals zusammenfällt. Hierzu ist es von Vorteil, die Umlenkkammer längs zum Fahrzeug anzuordnen und den Luftaustrittsschacht in der Seitenwand des Fahrzeuges vorzusehen.

Zur Minderung der Wirkung von auf das Fahrzeug auftreffenden Geschossen können die durch Beschuß erreichbaren Teile der Umlenkkammer wie beispielsweise das Luftführungselement gepanzert ausgeführt sein.

Die Erfindung soll nachfolgend anhand eines Ausführungsbeispiels näher erläutert werden.

Es zeigen
- Fig. 1: eine Prinzipdarstellung einer Seitenansicht eines gepanzerten Fahrzeuges im Teilschnitt,
- Fig. 2: einen Schnitt A-A der Umlenkkammer gemäß Figur 1,
- Fig.3: einen Schnitt B-B der Umlenkkammer gemäß Figur 1,
- Fig. 4: eine Draufsicht auf das Kühlluftsystem des Fahrzeuges und
- Fig. 5: eine perspektivische Darstellung des Einströmbereiches der Luft in die Umlenkkammer.

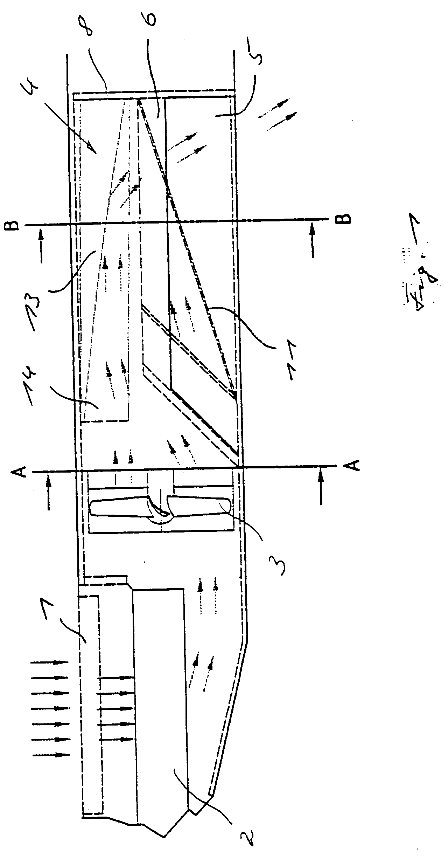

In der in Figur 1 schematisierten Seitenansicht eines gepanzerten Fahrzeuges sind die Elemente der Kühlanlage und die Kühlluftführung dargestellt. Die Kühlluft, deren Strömungsrichtung mit Pfeilen verdeutlicht ist, gelangt über die Eintrittsfläche 1 in das Fahrzeug, durchströmt den Kühler 2, wird von einem Gebläse 3 angesaugt und strömt in die Umlenkkammer 4, um schließlich durch die in der Seitenwand des Fahrzeuges befindliche Austrittsöffnung 5 des Luftaustrittsschachtes 6 der Umlenkkammer 4 das Fahrzeug zu verlassen.

Die Umlenkkammer 4 ist von den Mantelflächen 7.1 bis 7.4 und der Stirnfläche 8 begrenzt. Sie enthält eine gegenüber der Vertikalen geneigte, längs zur Umlenkkammer 4 verlaufende Stegwand 9, die einen dem Fahrzeuginnenraum zugewandten Luftführungskanals 10 von dem außenliegenden Luftaustrittsschacht 6 trennt.

Zwischen der Stegwand 9 und der dem Fahrzeuginnenraum zugewandten Mantelfläche 7.1 ist ein Leitblech 11 zu Verringerung des Querschnitts des Luftführungskanals 10 angeordnet.

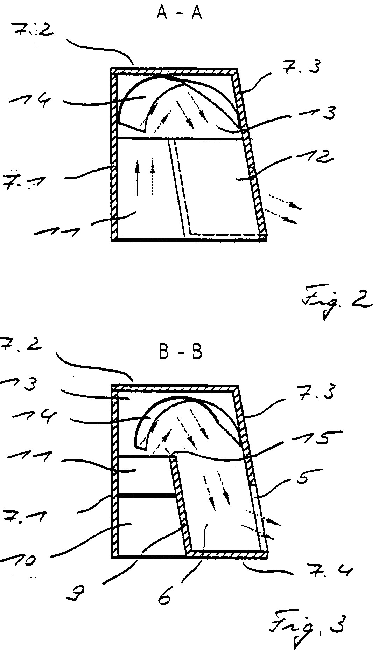

Im Eintrittsbereich der Luft in die Umlenkkammer 4 ist der Luftaustrittsschacht 6 durch eine Anströmwand 12 begrenzt (Fig. 2), die in Richtung des Luftführungskanals 10 und des Luftaustrittsschachtes 6 geneigt angeordnet ist.

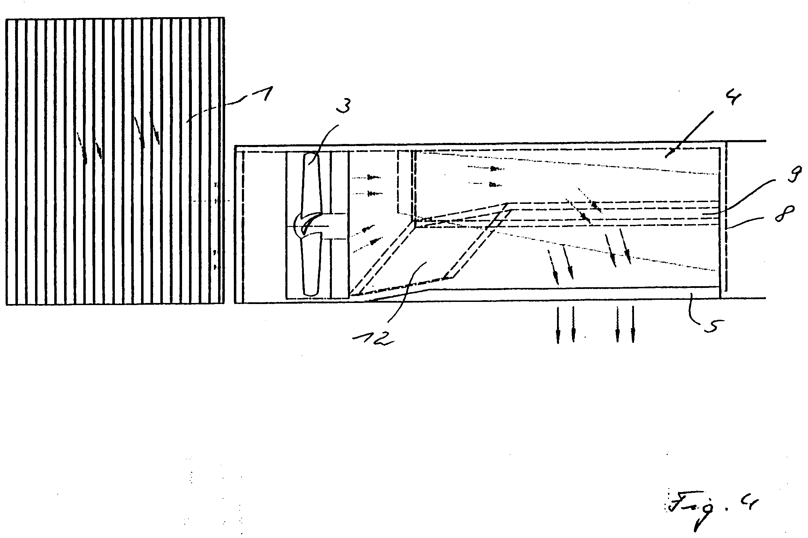

Die Stegwand 9, das Leitblech 11 und die Anströmwand 12 erstrecken sich nicht über die Gesamthöhe der Umlenkkammer 4, so daß ein Überströmbereich 13 geschaffen wird, in dem sich ein schraübenförmig gewundenes Umlenkblech 14 befindet (Fig. 2 und 3).

Die vom Gebläse 3 in die Umlenkkammer 4 geleitete Luft wird in einen, ohne Richtungsänderung in den Luftführungskanal 10 eintretenden, Teilstrom und in einen weiteren Teilstrom getrennt, der an der Anströmwand 12 sowohl in Richtung Luftführungskanal 10 als auch in Richtung des Luftaustrittsschachtes 6 gelenkt wird.

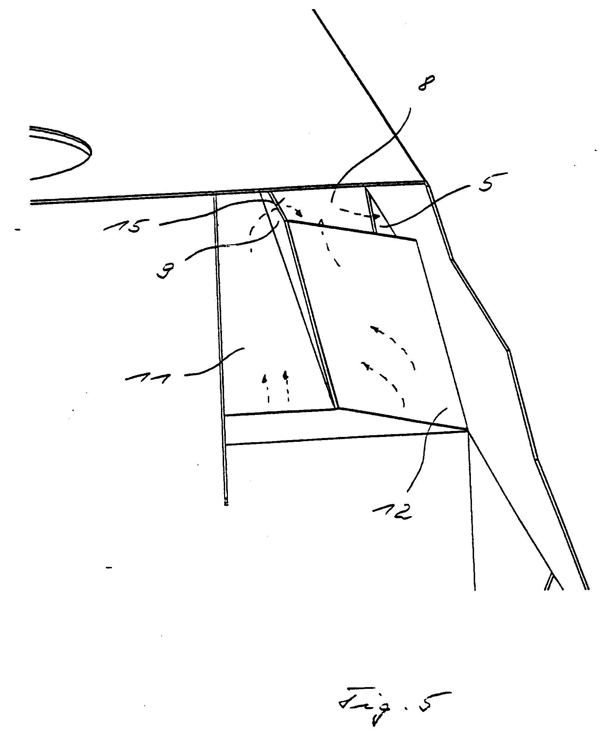

In Verbindung mit dem durch das Leitblech 11 gesteuerten Überströmen der Luft vom Luftführungskanal 10 in den Luftaustrittsschacht 6 über die freie Stirnseite 15 der Stegwand 9 ergeben sich unterstützt durch die Wirkung des Umlenkbleches 14 günstige Strömungsverhältnisse mit nur geringen Strömungsverlusten (Fig. 4 und 5).

Eine weitere Reduzierung der Verluste kann durch aerodynamisch geformte Auskleidungen der Umlenkkammer 4 erreicht werden. Zur Beschußsicherung der Umlenkkammer 4 können die gefährdeten Bereiche derselben mit einer zusätzlichen Panzerung versehen sein. Eine derartige Panzerung ist insbesondere am Umlenkblech 14 von Bedeutung, da hiermit das Gebläse 3 wirksam vor Beschädigung oder Zerstörung geschützt werden kann.

## Patentansprüche

1. Kühlluftführung zur Kühlung der Antriebsanlage eines gepanzerten Rad- oder Kettenfahrzeuges mit einem Lufteintrittsbereich, einem als Wärmetauscher dienenden Kühler, einen den Luftdurchsatz im Kühler steuernden Lüfter und einem Luftaustrittsbereich, der Mittel zur Änderung der Strömungsrichtung der abzugebenden Luft enthält, dadurch gekennzeichnet, daß im Luftaustrittsbereich (5,6) eine Umlenkkammer (4) vorgesehen ist, die einen dem Innenraum des Fahrzeuges zugewandten Luftführungskanal (10) aufweist, der durch eine längs zum Luftführungskanal (10) verlaufende Stegwand (9) und eine im Winkel zu dieser angeordnete Anströmwand (12) von einem Luftaustrittsschacht (6) getrennt ist, in den die Luft vom Luftführungskanal (10) durch Überströmen der freien Stirnseite (15) der Stegwand (9) in einen Überströmbereich (13) infolge Strömungsrichtungsänderung gelangt.

2. Kühlluftführung nach Anspruch 1, dadurch gekennzeichnet, daß der Querschnitt des Luftführungskanals (10) in Strömungsrichtung der Luft kontinuierlich verringert ist.

3. Kühlluftführung nach Anspruch 2, dadurch gekennzeichnet, daß zwischen der Innenwand (7.1) der Umlenkkammer (4) und der Stegwand (9) ein Leitblech (11) vorgesehen ist, das in Strömungsrichtung der Luft zu der freien Stirnseite (15) der Stegwand (9) ansteigt.

4. Kühlluftführung nach Anspruch 2 oder 3, dadurch gekennzeichnet, daß die Querschnittsverringerung des Luftführungskanals (10) in Abhängigkeit von der verbleibenden Restluftmenge erfolgt.

5. Kühlluftführung nach Anspruch 1 oder 2, dadurch gekennzeichnet, daß im Übergangsbereich (13) des Luftführungskanals (10) in den Luftaustrittsschacht (6) ein der Drehung der Luft um die Längsachse der Umlenkkammer (4) dienendes Luftführungselement (14) vorgesehen ist.

6. Kühlluftführung nach Anspruch 1 oder 2, dadurch gekennzeichnet, daß die Anströmwand (12) des Luftaustrittsschachtes (6) diesen nur teilweise abschließt.

7. Kühlluftführung nach Anspruch 1 oder 6, dadurch gekennzeichnet, daß die Anströmwand(12) des Luftaustrittsschachtes (6) derart geneigt ist, daß die Luft in Richtung des Luftführungskanals (10) gelenkt wird.

8. Kühlluftführung nach Anspruch 6 oder 7, dadurch gekennzeichnet, daß die Anströmwand (12) des Luftaustrittsschachtes (6) derart geneigt ist, daß die Luft in Richtung des Luftaustrittsschachtes (6) gelenkt wird.

9. Kühlluftführung nach einem der vorgenannten Ansprüche, dadurch gekennzeichnet, daß die Umlenkkammer (4) mit aerodynamisch geformtem Material ausgekleidet ist.

10. Kühlluftführung nach einem der vorgenannten Ansprüche, dadurch gekennzeichnet, daß die Strömungsrichtung der Luft vor dem Eintritt in die Umlenkkammmer (4) mit deren Längserstreckung zusammenfällt.

11. Kühlluftführung nach einem der vorgenannten Ansprüche, dadurch gekennzeichnet, daß die Umlenkkammer (4) längs zum Fahrzeug angeordnet und der Luftaustrittsschacht (6) Bestandteil der Seitenwand des Fahrzeuges ist.

12. Kühlluftführung nach einem der vorgenannten Ansprüche, dadurch gekennzeichnet, daß die durch Beschuß erreichbaren Flächen der Umlenkkammer (4) gepanzert ausgeführt sind.
